# FASCICULE DE BREVET EUROPEEN

(11) **EP 3 314 834 B1**
(45) Date de publication et mention de la délivrance du brevet: **10.08.2022**
(21) Numéro de dépôt: 16747813.0
(22) Date de dépôt: 23.06.2016
(51) Int. Cl.: H04L 27/26, H04L 25/03

(54) **PROCÉDÉ DE TRANSMISSION MULTI FLUX AVEC SÉLECTION DE LA MODULATION MULTI PORTEUSE EN FONCTION DU TYPE DE COMMUNICATION ASSOCIÉ**
VERFAHREN ZUR ÜBERTRAGUNG MEHRERER STREAMS MIT EINER MEHRTRÄGERMODULATIONSAUSWAHL GEMÄSS DEM ZUGEHÖRIGEN KOMMUNIKATIONSTYPEN
MULTIPLE STREAM TRANSMISSION METHOD COMPRISING MULTICARRIER MODULATION SELECTION ACCORDING TO THE ASSOCIATED COMMUNICATION TYPE

(30) Priorité: 24.06.2015 FR 1555824
(43) Date de publication de la demande: 02.05.2018
(73) Titulaire: Orange, 92130 Issy-les-Moulineaux (FR)
(72) Inventeur: LIN, Hao, 35700 Rennes (FR)
(86) Numéro de dépôt international: PCT/FR2016/051542
(87) Numéro de publication internationale: WO 2016/207555

(56) Documents cités:
- EP-A2- 1 603 295
- EP-A2- 1 835 682
- WO-A2-2014/016677
- SCHELLMANN MALTE ET AL: "FBMC-based air interface for 5G mobile: Challenges and proposed solutions", 2014 9TH INTERNATIONAL CONFERENCE ON COGNITIVE RADIO ORIENTED WIRELESS NETWORKS AND COMMUNICATIONS (CROWNCOM), ICST, 2 juin 2014 (2014-06-02), pages 102-107, XP032616104,
- VADDE V ET AL: "Partial response signaling for enhanced spectral efficiency and RF performance in OFDM systems", GLOBECOM '01 : IEEE GLOBAL TELECOMMUNICATIONS CONFERENCE ; SAN ANTONIO, TEXAS, USA, 25 - 29 NOVEMBER 2001, IEEE OPERATIONS CENTER, PISCATAWAY, NJ, vol. 5, 25 novembre 2001 (2001-11-25), pages 3120-3124, XP010747384, DOI: 10.1109/GLOCOM.2001.966001 ISBN: 978-0-7803-7206-1
- E V Hhi ET AL: "The 5GNOW Project Consortium groups the following organizations: Partner Name Short name Country FRAUNHOFER-GESELLSCHAFT ZUR FOERDERUNG DER ANGEWANDTEN FORSCHUNG 5G Waveform Candidate Selection The 5GNOW Project Consortium groups the following organizations: Partner Name Short name Country FRAUNHOFE", , 21 novembre 2013 (2013-11-21), XP055175081, Extrait de l'Internet: URL:http://www.5gnow.eu/system/files/5GNOW _D3.1_v1.1_1.pdf [extrait le 2015-03-10]
- LIN HAO: "Flexible Configured OFDM for 5G Air Interface", IEEE ACCESS, vol. 3, 19 octobre 2015 (2015-10-19), pages 1861-1870, XP011588143, DOI: 10.1109/ACCESS.2015.2480749

## Description

### Domaine de l'invention

Le domaine de l'invention est celui des communications mettant en œuvre une modulation multi porteuse.

L'invention trouve notamment des applications dans le domaine des communications sans fil ou filaires mettant en œuvre une modulation multi porteuse, par exemple pour des communications cellulaires LTE / LTE-A, pour des communications sans fil WIFI, WiMAX, pour des communications filaires PLC, ADSL, pour de la diffusion DVB-T, DVB-T2, DVB-H, DVB-NGH.

En particulier, l'invention trouve des applications dans les systèmes de futures générations (5G, etc.) pour lesquels il y aura une transmission simultanée entre des communications cellulaires de haut débit, sur voie montante ou descendante, dites MBB(acronyme des termes anglosaxons « Mobile Broadband Communications ») et des communications sporadiques à bas débit sur voie montante associées à des capteurs dites IoT (acronyme des termes anglosaxons « Internet of Things ») ou dites MTC (acronyme des termes anglosaxons « Machine Type Communications ») ou des communications V2X (Vehicular to Vehicular/Infrastructure communications).

### Art antérieur

Dans les années à venir, il est prévu une densification des réseaux de capteurs qui ont pour rôle de remonter des données vers une entité d'exploitation de ces données. On peut déjà citer les réseaux existants de caméras de vidéo-surveillance qui remontent des données vidéo. Il y a d'autres réseaux en cours de déploiement dans des domaines très variés tels que l'énergie avec la remontée de données de consommation de gaz ou d'électricité et tels que la santé avec la remontée de données physiologiques de patients. Il y a donc une augmentation prévisible de transmissions d'informations qui transiteront par un même lien physique qui sera souvent un lien radio. Les capteurs sont habituellement considérés comme statiques contrairement aux terminaux des communications cellulaires.

Il est aussi prévu la commercialisation de véhicules connectés permettant l'offre d'applications Internet regroupées sous la terminologie service V2X. Selon certains scénarios envisagés, les communications interviennent entre deux véhicules qui se déplacent en sens inverse et à grande vitesse, entre un véhicule et une station de base ou entre un véhicule et un relais. En tout état de cause, la qualité de service doit être garantie même lorsque le déplacement du véhicule est rapide.

Un service MTC c'est-à-dire associé aux communications sporadiques impose que le dispositif MTC ait une très faible consommation de puissance pour assurer une durée de vie de la batterie pouvant aller jusqu'à une dizaine d'années. En outre le coût de revient du dispositif MTC doit être très faible ce qui implique que sa complexité matérielle doit être très réduite. Une autre contrainte importante du service MTC est d'avoir un coût de signalisation particulièrement faible étant donné que plus de 100 000 dispositifs peuvent être connectés à l'intérieur d'une seule cellule.

Pour le service MBB c'est-à-dire associé aux communications cellulaires de haut débit dites MBB l'efficacité spectrale est très importante. Les communications cellulaires sont sous-entendues mises en œuvre avec des systèmes de transmission mobile large bande. La qualité de service est un autre facteur également très important vis-à-vis de l'utilisateur. Par contre, la consommation de puissance est un critère moins critique que pour le service MTC.

Le 3GPP définit ainsi des règles [3GPP] pour qu'une station de base soit en mesure de recevoir simultanément des communications provenant de terminaux mobiles qui exigent une connectivité presque permanente avec un haut voire très haut débit (plusieurs Mega bits/s) et des communications sporadiques provenant de capteurs. Les transmissions issues des capteurs ont en outre la particularité d'être bas débit (quelques bits/s, environ 20 octets par jour), de caractère aléatoire et ponctuel.

Les communications MTC sont basées sur une chaîne d'émission similaire à celle spécifiée pour les communications MBB. Ainsi la modulation est une modulation multi porteuse de type OFDM et chaque entité émet pendant un certain nombre d'intervalles de temps (« time slot »).

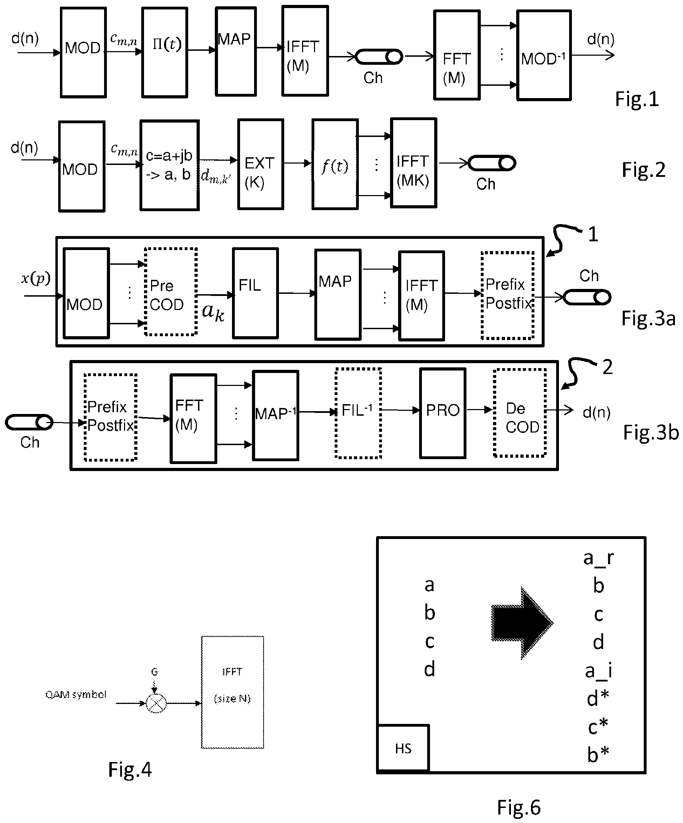

La chaîne d'émission d'une modulation OFDM illustrée en bande de base par la figure 1 comprend une modulation binaire à symboles MOD et une transformation fréquence temps réalisée au moyen d'une IFFT (Inverse fast Fourier Transform). Les symboles complexes *c_{m,n}* issus de la modulation sont mappés en entrée de la transformation sur les différentes sous porteuses. La taille M de la IFFT détermine le nombre de sous porteuse et la bande du signal OFDM de sortie. Le signal OFDM classique s'écrit en bande de base : $s \left(t\right) = \frac{1}{\sqrt{{T}_{0}}} {\sum }_{m = 0}^{M - 1} {\sum }_{n = - ∞}^{∞} {c}_{m , n} f \left(t-{nT}_{0}\right) {e}^{j 2 {πmF}_{0} t}$ avec $f \left(t\right) = Π \left(t\right) = { \begin{matrix}1 si - \frac{{T}_{0}}{2} \leq t < \frac{{T}_{0}}{2} \\ 0 sinon\end{matrix}$ *f*(*t*) est appelée fonction prototype, m est l'indice de sous porteuse, n est l'indice temporel, *j*² = -1, *T*₀ est la durée d'un symbole complexe *c_{m,n}*.

La fonction prototype de la modulation OFDM classique est un filtrage rectangulaire Π de durée *T*₀ égale à l'inverse de l'espacement inter sous porteuse *F*₀.

La modulation OFDM a de nombreux avantages et est reconnue comme bien adaptée pour la 5G i.e. les standards 3GPP LTE post advanced (R14 et suivants). En particulier, la construction de la modulation OFDM permet une insertion facile des pilotes. En outre, l'estimation de canal est facilement réalisable à la réception soit à partir de pilotes répartis, soit à partir d'un préambule et la transmission MIMO avec un signal OFDM est efficace.

Toutefois, il est aussi reconnu que la modulation OFDM n'est pas la mieux adaptée pour les communications MTC en particulier du fait que la réponse fréquentielle de la fonction porte Π est un sinus cardinal qui étale le spectre du signal OFDM.

Il est connu la modulation FBMC (Filter Bank Multi Carrier Modulation) et il est reconnu qu'elle a pour avantage de procurer un signal avec un spectre moins étalé que celui du signal OFDM.

Les principales techniques utilisées pour générer un signal multiporteuse de type FBMC sont le FS-FBMC (« Frequency Sampling-FBMC ») et le PPN-FBMC (« PolyPhase Network-FBMC »). Ces différentes techniques sont notamment présentées dans le document [Bellanger].

La construction FS-FBMC illustrée par la figure 2 se distingue de la construction OFDM en ce qu'après la modulation binaire à symbole MOD, les parties réelles *d_{m.k}*, et les parties imaginaires *d_{m,k},* des symboles complexes *c_{m,k}* sont traités séparément, ils sont dits ultérieurement symboles réels. *k* = 0,1,..., *N* - 1 avec *N* le nombre de symboles complexes en entrée et *k'* = 0,1,...,2*N* - 1. En outre, les symboles réels *d_{m,k},* sont étalés (spreading) par un extendeur : chaque symbole réel *d_{m,k},* d'indice *k'* est répété 2*K* - 1 fois avec *K* le facteur de recouvrement du filtre prototype avec *K* > 1. En sortie de l'extendeur EXT, les symboles réels sont filtrés i.e. multipliés par les coefficients d'un filtre *f*(*t*). Enfin, les symboles filtrés sont mappés à l'entrée de la transformation fréquence temps qui est de taille *MK.* La construction FS-FBMC utilise un bloc IFFT dont la taille est K fois celle du bloc IFFT de l'OFDM.

A la réception, la transformation temps fréquence est réalisée avec une FFT de taille *MK.* Le symboles de sortie sont filtrés et puis les symboles *d_{m,k},* sont reconstitués par addition de *K* symboles filtrés.

De même que pour la construction FS-FBMC, la technique de construction PPN-FBMC distingue la partie réelle de la partie imaginaire des symboles complexes pour les traiter comme des symboles réels. Par contre, elle n'utilise pas d'extendeur et utilise un bloc IFFT identique à celui de l'OFDM. Mais elle utilise un bloc de filtrage polyphase dit PPN (PolyPhase Network) après le bloc IFFT.

Selon la modulation FBMC, les sous porteuses de la transformée fréquence temps sont modulées par des valeurs réelles représentatives des parties réelle et imaginaire d'un symbole complexe.

Par rapport aux modulations de type OFDM, les modulations de type FBMC, FS-FBMC et PPN-FBMC, génèrent un signal mieux localisé en fréquence et présentant une meilleure efficacité spectrale. Ceci les rend plus robustes pour des communications asynchrones telles les communications MTC. En outre, les modulations FBMC sont mieux adaptées que la modulation OFDM classique pour les services V2X puisqu'elles ont une meilleure résistance au Doppler. Mais les modulations FBMC sont souvent considérées comme trop complexes. En effet, une des particularités est que les symboles temporels successifs générés en sortie de IFFT se recouvrent temporellement créant ainsi une interférence intrinsèque entre symboles successifs. Ce recouvrement vient d'un effet de suréchantillonnage qui intervient dans la construction du signal FBMC. Par conséquent, l'estimation de canal et la transmission d'un signal MIMO sont plus ardues pour un signal FBMC que pour un signal OFDM. SCHELLMANN MALTE ET AL: "FBMC-based air interface for 5G mobile: Challenges and proposed solutions",2014 9TH INTERNATIONAL CONFERENCE ON COGNITIVE RADIO ORIENTED WIRELESS NETWORKS AND COMMUNICATIONS (CROWNCOM), ICST, 2 juin 2014, ainsi que E V Hhi ET AL: "The 5GNOW Project Consortium groups the following organizations: Partner Name Short name Country FRAUNHOFER-GESELLSCHAFT ZUR FOERDERUNG DER ANGEWANDTEN FORSCHUNG 5G Waveform Candidate Selection The 5GNOW Project Consortium groups the following organizations: Partner Name Short name Country FRAUNHOFER",, 21 novembre 2013, proposent tous les deux de nouvelles waveforms pour la 5G permettant de satisfaire les différents types de service offerts (M2M ou broadband).

Il existe donc un besoin pour une technique de transmission multi services, les services appartenant à la liste comprenant au moins des communications sporadiques, des communications cellulaires de haut débit et des communications V2X qui permette de cumuler des avantages des modulations OFDM et FBMC et en particulier qui soit peu complexe et flexible pour générer une modulation OFDM de forme configurable (shaped OFDM) pour les services de la liste. Cette technique doit permettre de basculer de manière flexible d'une transmission simultanée de flux de données associés respectivement à des services différents appartenant à la liste précédente à une transmission d'un ou de plusieurs flux associés à un même service.

### Exposé de l'invention

L'invention propose un procédé de transmission multi flux de symboles à transmettre correspondant à des communications de type différent notamment de type sporadique MTC ou de type cellulaire MBB mettant en œuvre une modulation à M sous porteuses. tel que revendiqué dans la revendication 1.

Ainsi, le procédé utilise un filtrage linéaire fréquentiel d'une séquence de longueur *N* comprenant des symboles, à *L* coefficients paramétrables en fonction du type de communication, *L, N* et M étant des naturels, pour générer *N* + *L* - 1 symboles et il utilise quel que soit le service une même transformée fréquence temps de taille *M, N* < *M.*

L'invention a en outre pour objet un dispositif de télécommunication multi flux mettant en œuvre une modulation multiporteuse à M sous porteuses. tel que revendiqué dans la revendication 9.

Ce dispositif, qui peut tout aussi bien être une station de base qu'un point d'accès par exemple WiFi ou un terminal mobile, comprend un filtre linéaire fréquentiel à *L* coefficients paramétrables en fonction du type de communication pour générer *N* + *L* - 1 symboles à partir d'une séquence de longueur *N* comprenant des symboles et il comprend un transformateur fréquence temps de taille *M* commun quel que soit le service, L, N et M étant des naturels, *N* < *M.*

L'invention proposée permet ainsi de générer aussi bien une modulation OFDM classique qu'une modulation FBMC en modifiant le paramétrage du filtre en fonction du type de communication. Le dispositif de télécommunication supporte ainsi très aisément les services correspondant respectivement à des communications MBB, des communications MTC et des communications V2X.

En particulier, la modulation multi porteuse est de type FBMC pour les communications sporadiques MTC et de type OFDM pour les communications cellulaires MBB.

Le procédé multi flux est apte à transmettre dans un même symbole multi porteuse issu de la transformée fréquence temps des symboles associés à des services différents et en particulier un service MTC et un service MBB.

Compte tenu de la nature linéaire du filtre, le procédé peut pré-égaliser la modification de phase introduite par le filtre. Ainsi, le récepteur annule plus facilement les interférences inter porteuses introduites par le filtre.

Selon un mode de réalisation du procédé d'émission les symboles filtrés sont mappés à l'entrée de la transformée fréquence temps et, lors d'une mise en trame, un premier préfix et un deuxième préfix cycliques formatés sont ajoutés à un symbole multi porteuse obtenu en sortie de la transformée.

Selon un mode de réalisation du procédé d'émission les *N* symboles sont pré codés avant d'être filtrés, le pré codage pré égalisant un effet de déphasage du filtrage.

Selon un mode de réalisation du procédé d'émission les coefficients du filtre sont égaux à {1, -*w*} avec *w* ∈ [0,1], *L* = 2. Selon un mode de réalisation, *w* = 0, les symboles à transmettre sont complexes et la séquence de longueur *N* est composée de *N* symboles complexes à transmettre. Ce mode de réalisation permet d'obtenir une modulation OFDM classique.

Selon un mode de réalisation du procédé d'émission, les symboles filtrés sont mappés à l'entrée de la transformée fréquence temps et le procédé comprend en outre un mappage de pilotes à l'entrée de la transformée fréquence temps. Ce mode de réalisation permet d'obtenir une modulation OFDM compatible des standards 3GPP LTE existants (avec signalisation QAM).

Selon un mode de réalisation du procédé d'émission, *w* ≠ 0, les symboles à transmettre sont complexes et la séquence de longueur *N* est composée de successions de la partie réelle et de la partie imaginaire des symboles à transmettre.

Selon un mode de réalisation du procédé d'émission, le procédé comprend en outre une insertion de pilotes complexes dans la séquence de *N* symboles avant le filtrage telle que pour un même pilote de forme *Pᵣ* + *jPᵢ* sa partie réelle *Pᵣ* est insérée sous la forme *-Pᵣ*/*w* et sa partie imaginaire est insérée à la suite sous la forme *jPᵢ*. Ce mode de réalisation (avec signalisation QAM) permet d'obtenir une modulation OFDM formatée (shaped-OFDM) avec un motif de pilotes compatible des standards 3GPP LTE existants.

Selon un mode de réalisation du procédé d'émission, le procédé comprend l'émission d'un message de signalisation codant le paramétrage.

Selon un mode de réalisation du procédé d'émission, plusieurs séquences de symboles sont traitées en parallèle avec un paramétrage pour chaque communication de type différent associées aux séquences et les séquences traitées sont mappées à l'entrée de la même transformée fréquence temps chacune sur une sous bande des M sous porteuses, le nombre de symboles pouvant être différent entre les séquences.

### Liste des figures

D'autres caractéristiques et avantages de l'invention apparaîtront lors de la description qui suit faite en regard des figures annexées données à titre d'exemple non limitatif.
La figure 1 est un schéma de la chaîne d'émission et de réception d'une modulation OFDM classique.
La figure 2 est un schéma de la chaîne d'émission d'une modulation FBMC.
Les figures 3a et 3b sont des schémas des principaux traitements mis en œuvre respectivement à l'émission et à la réception selon le procédé de transmission multi flux proposé.
La figure 4 est un schéma du précodage à l'émission selon un mode de réalisation de l'invention correspondant à une modulation avec symboles QAM.
La figure 5 est un schéma du précodage à l'émission selon un mode de réalisation de l'invention correspondant à une modulation avec symboles OQAM.
La figure 6 est un schéma de la fonction HS du précodage de la figure 5.Les figures 7a et 7b sont des schémas d'exemples de la structure des filtres respectivement d'émission et de réception pour une séquence de *N* = 5 symboles, des coefficients des filtres égaux à {1, -*w*} et une modulation OFDM selon un mode de réalisation de l'invention.
La figure 8 est un schéma du symbole OFDM construit avec des symboles QAM, formaté grâce au filtre et auquel le procédé ajoute un préfix au début du symbole et un préfix à la fin du symbole (postfix).
La figure 9 est un schéma d'un exemple de mise en œuvre du décodage symbole au récepteur en l'absence de filtre à la réception.
La figure 10 est un schéma d'un exemple de mise en œuvre du décodage symbole au récepteur en présence de filtre à la réception.
La figure 11 est un schéma de la structure du filtre d'émission pour une séquence de *N* = 5 symboles, des coefficients des filtres égaux à {1, -*w*} et une modulation FBMC selon un mode de réalisation de l'invention.
La figure 12 est un schéma de la structure du filtre d'émission pour une séquence de *N* = 5 symboles, des coefficients des filtres égaux à {1, -*w*} avec une insertion de pilotes dans la séquence à filtrer et une modulation OFDM selon un mode de réalisation de l'invention.
La figure 13 est un schéma de l'arrangement effectué sur les symboles reçus lorsqu'il y a eu une insertion de pilotes à l'émission dans le cas d'une modulation OFDM selon un mode de réalisation de l'invention.
La figure 14 est un schéma de la structure du filtre d'émission pour une séquence de *N* = 5 symboles, des coefficients des filtres égaux à {1, -*w*} avec une insertion de pilotes dans la séquence à filtrer et une modulation OFDM avec symboles OQAM selon un mode de réalisation de l'invention.
La figure 15 est un schéma d'un dispositif d'émission multi flux avec la bande d'émission de taille M partagée en sous bandes dédiées chacune à une communication d'un type donné.
La figure 16 est un schéma d'un dispositif d'émission multi flux avec la bande d'émission M partagée en sous bandes dédiées respectivement à un service MBB et à un service MTC.
La figure 17est un schéma illustrant l'adaptation des séquences avant filtrage sous la forme d'un étirement temporel pour des symboles d'un service MBB.
La figure 18 est un schéma illustrant l'adaptation des symboles mappés dans la sous bande de protection avec symboles OQAM et un cadencement moitié.
La figure 19 est un schéma illustrant l'adaptation des symboles mappés dans la sous bande de protection avec symboles QAM et un cadencement plein.
La figure 20 est un schéma illustrant le cadencement pour la modulation FBMC.
La figure 21 est un schéma illustrant l'ajout de préfix cycliques sur un symbole en sortie de IFFT qui combine les services MTC ou V2X et MBB.
La figure 22 est un schéma illustrant l'ajout de préfix cycliques sur un symbole en sortie de IFFT qui est composé que du service MTC ou V2X.
La figure 23 est un schéma de la sommation avec recouvrement entre symboles successifs après ajout de préfix cycliques.

### Description de modes de réalisation de l'invention

La technique de transmission selon l'invention est illustrée par les figures 3a et 3b. Le procédé 1, 2 de transmission multi flux correspondant à des communications de type différent utilise un filtrage linéaire fréquentiel à L coefficients paramétrables en fonction du type de communication, L et M étant des naturels. Un tel filtrage linéaire est une convolution linéaire : $y \left(p\right) = {\sum }_{n = 0}^{L - 1} x \left(p-n\right) \times$$f \left(n\right)$ des échantillons d'entrée *x*(*p*) avec les coefficients d'une fonction de filtrage *f*(*n*). En outre, quel que soit le type de communication le procédé utilise une même transformée fréquence temps de taille M couramment appelé IFFT.

Les symboles modulés, par exemple des symboles complexes QAM, issus de la modulation MOD sont groupés par bloc de *N* ou séquence de symboles de longueur *N, N* < *M.* De manière optionnelle, les symboles sont précodés par un précodeur PreCOD. Ils sont ensuite filtrés par un filtre FIL linéaire à L coefficients dans le domaine fréquentiel. Le filtrage linéaire consiste en une convolution linéaire. Ainsi, si la séquence d'entrée a pour longueur *N* alors la séquence filtrée a pour longueur *N* + *L* - 1, *N* + *L* - 1 ≤ *M. L* - 1 est dit la queue de convolution, elle réduit l'efficacité spectrale. En notant *aⱼ* avec *j* ∈ [0*, N* - 1], les symboles précodés alors les symboles filtrés *yₖ* avec *k* ∈ [0, *N* + *L* - 1] s'expriment sous la forme : ${y}_{k} = {\sum }_{l = 0}^{L - 1} {f}_{l} \times {a}_{k - l}$ avec *fₗ* les coefficients du filtre, *l* ∈ [0, *L* - 1].

Les symboles filtrés sont ensuite mappés par un mappeur MAP à l'entrée de la transformée IFFT fréquence temps de taille M.

Le filtrage introduit des interférences entre les sous porteuses. Un précodage peut alors être introduit pour permettre au récepteur d'annuler plus facilement les interférences. Le filtrage étant linéaire, le précodage a pour fonction de pré égaliser la phase du filtre.

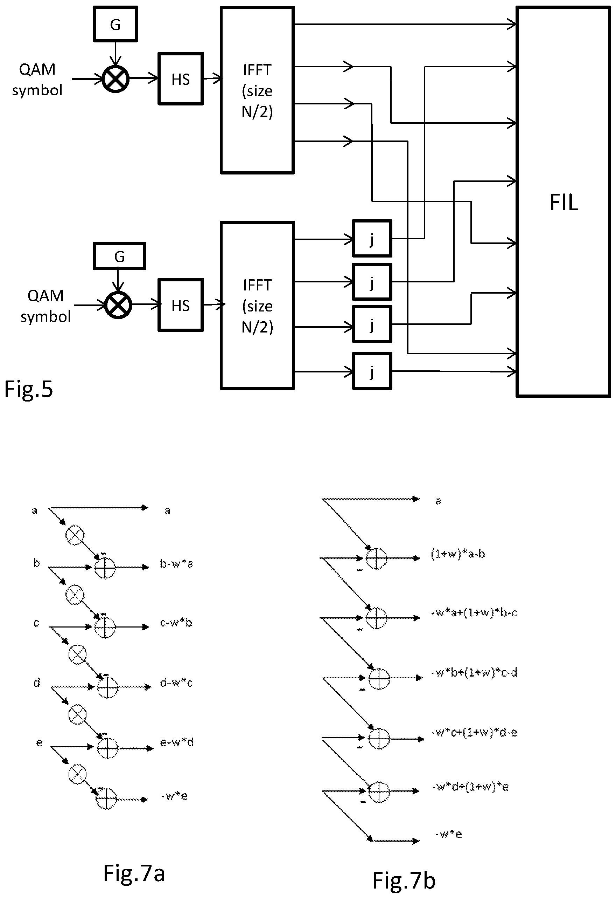

Dans le cas d'une modulation construite avec des symboles QAM, le précodage revient à pondérer les symboles avec un coefficient G puis à les transformer avec une transformée fréquence temps IFFT comme illustré par la figure 4. Le coefficient G a pour valeur : $G = \frac{{H}_{ef}^{∗}}{\left|{H}_{ef}\right|}$ avec *H_{ef}* les coefficients fréquentiels du filtre équivalent. Le filtre équivalent est différent du filtre à l'émission s'il y a un filtrage à la réception. Pour exemple, si le filtre à l'émission est du type sinusoïdal alors les coefficients fréquentiels sont {1, -w}. Quand il n'y a pas de filtrage à la réception alors *H_{ef}* = *DFT*({1, -*w*}, *N*) avec DFT une transformée de Fourier discrète de taille *N* égale à la longueur de la séquence des symboles *aⱼ* en entrée du précodeur. Quand il y a un filtrage à la réception de type celui de la Figure 7b, alors *H_{ef}* = *DFT*([-*w*, 1 + w, -1}, *N*) Les sorties de la IFFT alimentent ensuite le filtre d'émission.

Dans le cas d'une modulation construite avec des symboles OQAM, le précodage est illustré par la figure 5. La figure 6 donne le détail du boîtier HS de la figure 5. Les symboles modulés QAM d'entrée sont considérés répartis dans deux voies et pondérés avec un coefficient G. Les symboles pondérés sont ensuite arrangés de manière similaire à ce qui est illustré par la figure 6 lorsque la séquence d'entrée comprend *N*/4 = 4 symboles modulés, a, b, c et d par voies. La séquence de sortie de chaque voie est transformée par une IFFT de taille *N*/2. Les échantillons de sortie ont des valeurs réelles. Les sorties d'une des deux IFFT sont multipliées par j pour obtenir des valeurs imaginaires. Les sorties de l'autre IFFT et les valeurs imaginaires sont aiguillées en entrée du filtre d'émission.

Le paramétrage du filtre linéaire répond à des contraintes imposées au signal émis, en particulier la forme requise du spectre, relatives au service de communication correspondant. En particulier, un service de diffusion, par exemple le service MBMS spécifié par le 3GPP LTE nécessite un filtre plus robuste contre les effets d'étalement qu'un service de communication de voix dit classique.

Les figures 7a et 7b sont des schémas pour illustrer la structure et le paramétrage d'un exemple de filtre de forme sinusoïdale respectivement à l'émission et à la réception pour la génération d'une modulation OFDM formatée (shaped OFDM) avec des symboles de type QAM.

L'exemple illustré est relatif à *N* = 5 symboles i.e. *a, b, c, d et e.* Le filtrage à l'émission porte sur *N* = 5 symboles en entrée et fournit *N* + 1 = 6 échantillons en sortie. Les coefficients du filtre sont {1, *w*} avec w un poids de pondération, w ∈ [0,1]. La structure du filtre est telle que la 1^{ère} sortie correspond au 1^{er} symbole, *a,* pondéré par le 1^{er} coefficient, 1, : a, la *n^{e}* sortie est le résultat de la différence entre le *n^{e}* symbole pondéré par le 1^{er} coefficient, 1, et le (*n* - 1)*^{e}* symbole pondéré avec le 2^{nd} coefficient, w, pour 1 < *n* ≤ *N : b* - w × *a*, c - w × *b, d* - *w* × *c*, *e* - *w* × *d*. La (*N* + 1)*^{e}* sortie correspond au *n^{e}* symbole pondéré avec le 2^{nd} coefficient, w, auquel on affecte le signe négatif : -*w* × *e*. Cette structure réalise la convolution linéaire entre les symboles d'entrée *a, b, c, d et e* et les coefficients {1, *w*} du filtre.

La valeur *w* = 0 permet de ne pas avoir de fonction filtrage sur les symboles QAM d'entrée : chacun des *N* = 5 symboles se retrouve intacte en sortie. Un tel paramétrage revient à mapper les symboles QAM directement en entrée de la transformée fréquence temps ce qui permet de générer un signal OFDM classique donc avec une fonction de formatage (filtrage) identique à une fonction porte. En outre, dans ce cas il n'y a pas non plus besoin de précodage puisque le système est orthogonal. Le paramétrage du filtre linéaire avec *w* = 0 est par exemple adapté pour un service MBB.

La valeur *w* = 1 permet de filtrer avec une fonction sinusoïdale de demi-période temporelle. Le signal OFDM obtenu est donc filtré avec une forme sinusoïdale qui améliore le spectre en réduisant son étalement fréquentiel. Le paramétrage du filtre linéaire avec *w* = 1 permet de construire une modulation formatée avec un profil temporel sinusoïdal.

La forme temporelle du filtre devient une forme sinusoïdale tronquée et étendue lorsque *w* ∈ ]0,1[.

Ainsi le paramétrage de la valeur du coefficient w permet de formater la forme temporelle du filtre d'émission.

Selon un autre exemple, le filtre a la forme d'un cosinus surélevé. La forme du cosinus est définie sur une fenêtre temporelle de durée T, *k* ∈ [0, *T* - 1] égale à la taille de la IFFT : *T* = *M.* Le filtre a pour expression temporelle : $F \left(k\right) = { \begin{matrix}\begin{matrix}0.5 \left(1+cos\left(\frac{π \left(1+k\right)}{βM / 2}\right)\right) \\ 1 \\ 0.5 \left(1+cos\left(\frac{π \left(k\right)}{βM / 2}\right)\right)\end{matrix} & \begin{matrix}k ∈ \left[0,\left(βM/2\right)-1\right] \\ k ∈ \left[\left(βM/2\right)-1,M-\left(βM/2\right)\right] \\ k ∈ \left[M-\left(\frac{βM}{2}\right)+1,M-1\right]\end{matrix}\end{matrix}$ avec *β* le facteur de « roll-off ». Les coefficients du filtre en fréquence sont obtenus après une transformation temps fréquence des coefficients temporels. Compte tenu que ces coefficients ont une valeur réelle, seules sont considérées les valeurs réelles en sortie de FFT. En outre seuls sont considérés les coefficients les plus significatifs. Selon un premier critère de sélection, le procédé ne considère que les 2 × *L'* - 1 avec *L'* = *round*(2/*β*) , valeurs réelles les plus significatives pour constituer les coefficients.

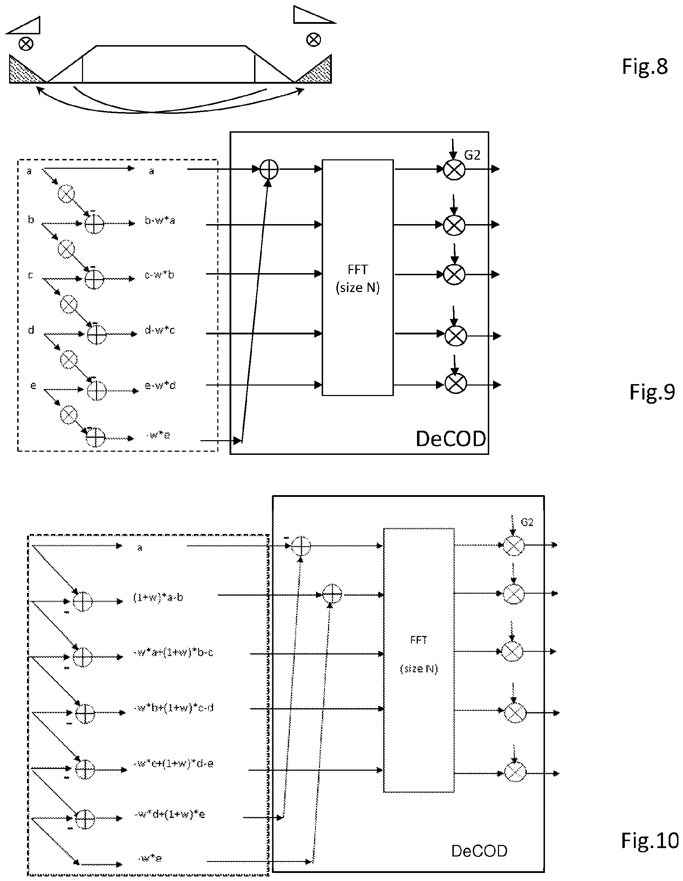

De manière optionnelle, le procédé ajoute un ou plusieurs préfix au symbole de sortie de la IFFT. La figure 8 est un schéma du symbole OFDM construit avec des symboles QAM, formaté grâce au filtre et auquel le procédé ajoute deux préfix, un au début du symbole et un autre à la fin du symbole (postfix). Les préfix sont formatés. L'ajout de deux préfix est particulièrement utile lorsque le filtre a une forme sinusoïdale et que le coefficient *w* est proche de zéro. En effet, ils permettent de limiter l'étalement du spectre.

A la réception comme illustré par la figure 3b, le traitement est inverse de celui à l'émission. Les préfix sont extraits du signal reçu s'ils ont été insérés à l'émission. Les symboles reçus sont ensuite transformés en symboles fréquentiels au moyen d'une transformée temps fréquence FFT. Le démappeur MAP⁻¹ en sortie de la FFT réordonne les symboles en les extrayant des sous porteuses selon un ordre inverse de celui à l'émission. Les symboles ordonnés sont éventuellement filtrés par un filtre FIL⁻¹. Des traitements classiques sont ensuite déroulés pour effectuer une estimation du canal, une égalisation du canal et éventuellement un décodage MIMO. En final, les symboles sont décodés au moyen d'un décodeur DeCOD si un précodage est intervenu à l'émission.

La structure du filtre FIL⁻¹ de réception illustré par la figure 7b porte sur N + 1 = 6 échantillons en entrée et fournit N + 2 = 7 échantillons en sortie. La structure du filtre est telle que :
la 1^{ère} sortie correspond au 1^{er} échantillon reçu, soit le 1^{er} échantillon issu du filtrage à l'émission qui correspond au 1^{er} symbole *a* pondéré par le 1^{er} coefficient, 1, : 1 × *a* = *a,*
la *n^{e}* sortie est le résultat de la différence entre le (*n* - 1)*^{e}* échantillon reçu et le (*n*)*^{e}* échantillon reçu, 1 < n ≤ *N*+*1,*
la (*N* + 2)*^{e}* sortie correspond au *N^{e}* échantillon reçu, soit le (*N* + 1)*^{e}* échantillon issu du filtrage à l'émission qui correspond au *N^{e}* symbole pondéré avec le 2^{nd} coefficient, w, auquel on affecte le signe négatif : -*w* × *e*.

En l'absence de filtre FIL⁻¹ à la réception, le décodage symbole DeCOD illustré par la figure 9 réduit la séquence de *N* + 1 symboles reçus en une séquence de *N* symboles et alimente la FFT avec ces N symboles. La boîte en pointillés représente l'action du filtre à l'émission sur les symboles. La réduction consiste à ajouter ensemble le premier et le dernier symboles de la séquence reçue. Cette réduction permet de construire une convolution cyclique. Le résultat de l'addition de ces deux symboles est alors pris comme premier symbole en entrée de FFT. En sortie de FFT, le décodage symbole égalise les symboles en sortie de la FFT en pondérant les symboles avec le coefficient G2 = |*H_{ef}*|.

En présence de filtre FIL⁻¹ à la réception, le décodage symbole DeCOD illustré par la figure 10 réduit la séquence de *N* + 2 symboles reçus en une séquence de *N* symboles et alimente la FFT avec ces *N* symboles. La boîte en pointillés représente l'action du filtre à l'émission sur les symboles. La réduction consiste à retrancher le premier symbole reçu à l'avant dernier symbole reçu et à ajouter ensemble le deuxième et le dernier symboles de la séquence reçue. Cette réduction permet de construire une convolution cyclique. Le résultat de la soustraction est pris comme premier symbole en entrée de FFT. Et le résultat de l'addition est pris comme deuxième symbole en entrée de FFT. En sortie de FFT, le décodage symbole égalise les symboles en sortie de la FFT en pondérant les symboles avec le coefficient G2 = |*H_{ef}*|.

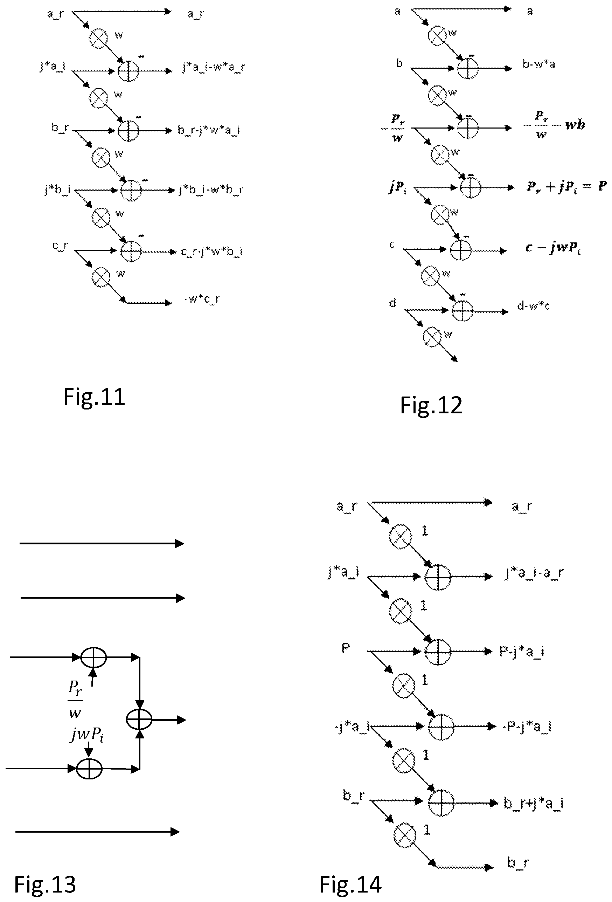

Lorsque la modulation à générer est de type FBMC, la chaîne d'émission est identique à celle décrite précédemment, en particulier le filtre à l'émission a exactement la même structure que celle illustrée par la figure 7a. Par contre, les symboles en entrée du filtre sont pris en compte différemment. Cette différence illustrée par la figure 11 revient à considérer séparément la partie réelle et la partie imaginaire de chaque symbole de type QAM, par exemple *a* = *aᵣ* + *jaᵢ*, et à les considérer en séquence. Ainsi en gardant une même longueur (*N*) de séquence que pour la figure 7a, le procédé considère que la séquence est formée de {*aᵣ*, *jaᵢ*, *bᵣ*, *jbᵢ*, *cᵣ* } et non pas formée de {*a, b, c, d, e* }.

Des pilotes peuvent être insérés dans les symboles OFDM formatés générés. Cette insertion intervient entre le précodage lorsqu'il existe et le filtrage linéaire.

Dans le cas d'une modulation avec symboles QAM, la description de l'insertion des pilotes est illustrée par la figure 12 qui correspond au cas d'un filtre à forme sinusoïdale avec des coefficients (1, -*w*) tel que *w* ≠ 0. Les pilotes sont généralement complexes et peuvent s'écrire *P* = *Pᵣ* + *jPᵢ*, avec *Pᵣ* la partie réelle et *Pᵢ* la partie imaginaire. La partie réelle du pilote est insérée dans la séquence d'entrée du filtre sous la forme *-Pᵣ*/*w* et la partie imaginaire *jPᵢ* est insérée à la suite dans la séquence. Compte tenu de la structure du filtre, le pilote *P* = *Pᵣ* + *jPᵢ* se retrouve à l'identique sur une des sorties et selon l'illustration sur la 4^{e} sortie.

Connaissant l'arrangement de séquence utilisé à l'émission, le récepteur est capable d'effectuer une estimation de canal à partir du pilote P = *Pᵣ* + *jPᵢ* émis. Connaissant le pilote émis, le récepteur est à même, en référence à la figure 13, d'ajouter la quantité *Pᵣ*/*w* au troisième échantillon de la séquence reçue pour récupérer *-wb* et d'ajouter la quantité *jwPᵢ* au cinquième échantillon de la séquence reçue pour récupérer c sachant que le quatrième échantillon, le pilote P, n'apparaît pas sur la figure. En additionnant les deux résultats, le récepteur retrouve l'échantillon *c* - *wb* qui manquait à la séquence reçue conformément à ce qui est illustré dans le bloc pointillé de la figure 9.

Dans le cas d'une modulation avec symboles OQAM, l'insertion des pilotes est illustrée par la figure 14 qui correspond au cas d'un filtre à forme sinusoïdale avec des coefficients {1, -*w*} tel que *w* # 0.

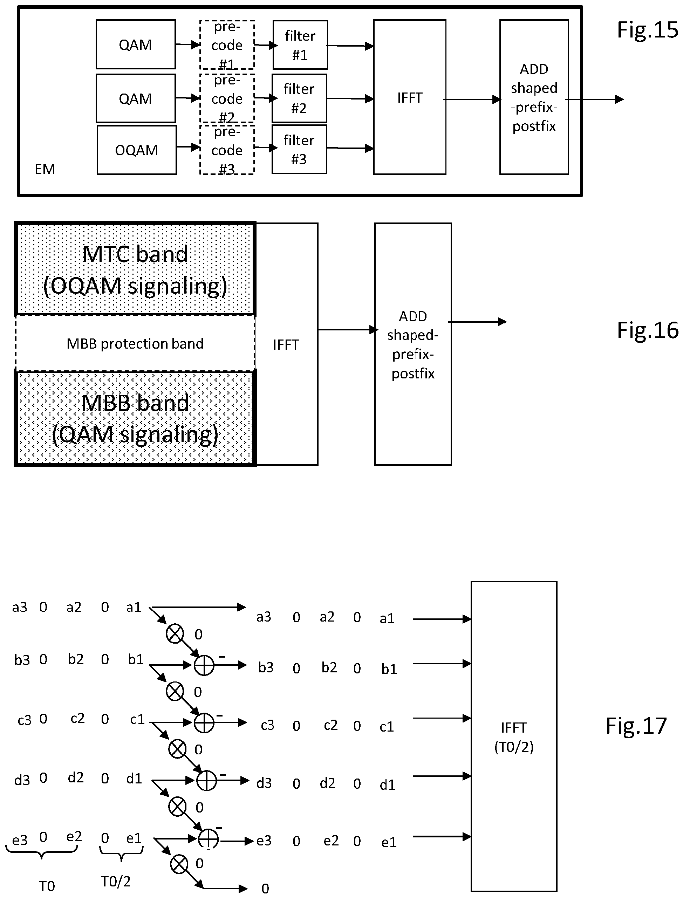

Selon un mode de mise en œuvre la bande d'émission de taille *B* est partagée en sous bande, la bande *B* est donnée par la taille de la IFFT : *B* = *M*. Chaque sous bande peut être dédiée à un service et différents services peuvent être dédiés à différentes sous bandes. Les sous bandes peuvent être de taille différente. Un dispositif d'émission correspondant est illustré par la figure 16. Selon l'illustration, les symboles OFDM formatés en sortie de IFFT comprennent des symboles associés à au moins trois services différents. Deux services, par exemple MBB, sont associés à une modulation OFDM avec symbole QAM et un service, par exemple V2X ou MTC, est associé à une modulation FBMC avec symboles OQAM. Le paramétrage est spécifique pour chaque service. Les symboles associés à un service sont traités conformément au traitement illustré et détaillé en regard de la figure 3a. La seule différence par rapport à la figure 3a est que les symboles filtrés associés au service sont mappés sur une sous bande de la bande M et non pas sur la bande totale M. L'invention permet ainsi de transmettre simultanément des symboles émanant de services différents et nécessitant des modulations OFDM classique et FBMC ce que ne permet pas les modulateurs existants. La structure proposée est en effet très souple et facilement configurable.

L'invention permet ainsi avec un dispositif d'émission construit autour d'une transformée IFFT fréquence temps unique et des filtres paramétrables de même structure d'émettre simultanément des communications de type MBB, de type MTC et de type V2X. Un tel mode de réalisation est plus amplement décrit ci-après dans le cas d'une émission simultanée d'un service MTC et d'un service MBB illustré par la figure 16. Le service MTC est rendu avec une modulation OFDM/OQAM et le service MBB est rendu avec une modulation OFDM. Le système traite donc simultanément des symboles de type différent, QAM et OQAM pour émettre simultanément les services MBB et MTC. Une sous-bande est attribuée à chacun des services, « MTC band (OQAM signaling) » et « MBB band (QAM signaling) ». Les deux sous-bandes sont séparées par une sous-bande de protection « MBB protection band ». Cette sous-bande fait partie de la sous-bande d'un des deux services pour ne pas perdre en efficacité spectrale. Toutefois les symboles mappés sur cette sous-bande ont un traitement adapté pour limiter les interférences entre les sous-bandes MTC et MBB compte tenu de la non orthogonalité entre les symboles mappés sur les sous-bandes MTC et MBB.

Compte tenu que la IFFT d'une modulation OFDM/OQAM a une fréquence de mise en œuvre deux fois plus élevée que celle de la IFFT d'une modulation OFDM classique, la séquence des symboles à filtrer pour la modulation OFDM doit être adaptée.

Pour les symboles QAM mappés sur la sous bande MBB, un mode de réalisation de cette adaptation sous la forme d'un étirement temporel est décrit en relation avec la figure 17.

La IFFT qui est commune aux modulations OFDM classique et OFDM/OQAM est mise en œuvre avec la fréquence la plus élevée soit 2/T0. Les symboles à filtrer pour la modulation OFDM classique arrivent en séquence/bloc avec une fréquence 1/T0. Les séquences doivent donc être étirées pour être transformées avec la IFFT à la fréquence 2/T0. L'étirement le plus simple consiste à insérer une séquence de symboles nuls entre chaque séquence de symboles à filtrer. Le paramétrage du filtre est tel que les coefficients sont {1, 0} pour l'obtention d'une modulation OFDM classique.

Selon le mode de réalisation décrit, la bande de protection est prise dans la sous bande allouée au service MBB.

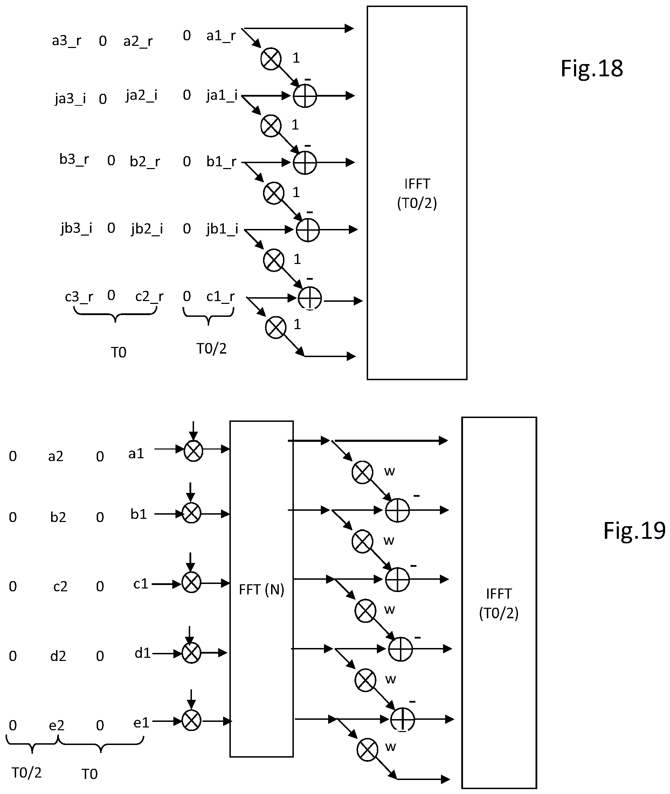

Les symboles QAM mappés dans la sous bande de protection peuvent être adaptés selon deux possibilités. Selon la première possibilité illustrée par la figure 18, le procédé utilise des symboles OQAM avec un cadencement moitié. Les symboles QAM d'entrée sont donc mis en séquences pour être traités comme des symboles OQAM mais avec une cadence moitié, c'est-à-dire *T*0. Deux séquences successives sont séparées par une séquence de zéros. Les coefficients du filtre sont {1, -*w*}, avec *w* = 1. Selon la seconde possibilité illustrée par la figure 19, le procédé utilise des symboles QAM avec un cadencement plein et un filtre de coefficients {1, -*w*}, avec 0 < *w* < 1. Un précodage est alors nécessaire.

La première possibilité ne nécessite pas de précodage ce qui permet au récepteur de détecter les symboles directement après la IFFT et de permettre au détecteur de bénéficier de la diversité fréquentielle du canal. Mais le cadencement moitié fait perdre de l'efficacité spectrale sur la sous bande de protection. La seconde possibilité procure une meilleure efficacité spectrale mais nécessite un précodage. Ceci impose alors au récepteur un décodage symbole avant la détection ce qui ne permet pas au détecteur de bénéficier de la diversité fréquentielle du canal. Les deux possibilités permettent chacune au récepteur de filtrer de manière efficace les symboles reçus pour réduire les interférences entre les sous bandes MBB et MTC.

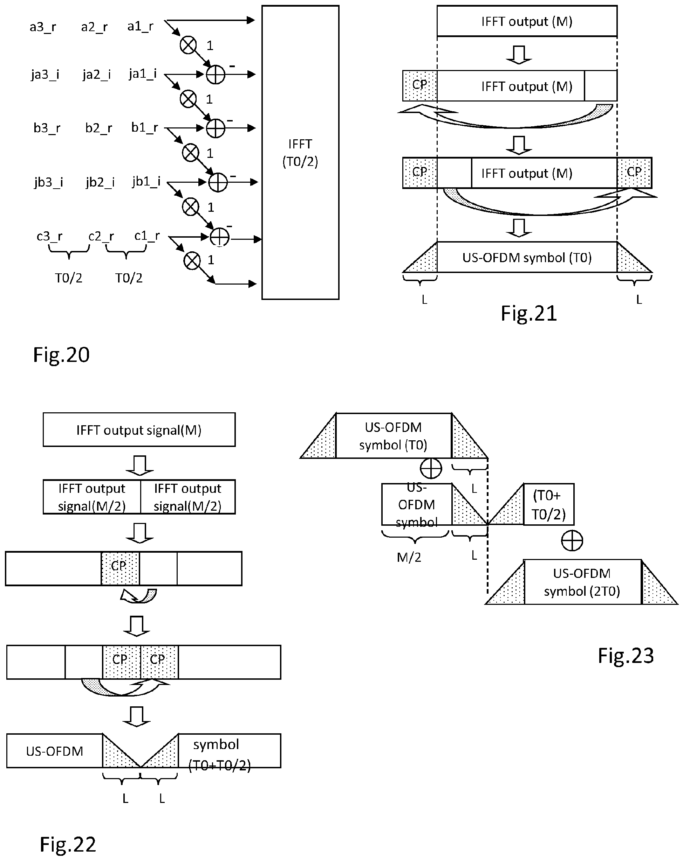

Pour les symboles OQAM mappés sur la sous bande MTC, les symboles QAM d'entrée sont mis en séquences pour être traités comme des symboles OQAM. Ils arrivent donc avant filtrage en séquence à la cadence T0/2 puisque la partie réelle et la partie imaginaire de chaque symbole sont considérées en série dans les séquences à filtrer comme illustrée par la figure 20. Il n'y a pas d'adaptation de cadence. Le paramétrage du filtre est tel que les coefficients sont {1, -1} pour l'obtention d'une modulation OFDM/OQAM.

La sortie de la IFFT fournit donc tous les T0 un signal qui combine les services MTC et MBB et tous les T0+T0/2 un signal composé uniquement du service MTC. La largeur de la bande de protection est un paramètre du système et dépend du décalage (offset) de puissance entre les services MBB et MTC. Par exemple, si ce décalage est nul alors seulement quelques sous porteuses sont nécessaires pour la sous bande de protection.

Tous les T0, le procédé ajoute un préfix cyclique CP formaté en début et en fin du symbole de sortie de IFFT, comme illustré par la figure 21. Le préfix cyclique CP ajouté en début du symbole de sortie de IFFT est une copie des L derniers échantillons des M échantillons du symbole. Le préfix cyclique CP ajouté en fin du symbole de sortie de IFFT est une copie des L premiers échantillons des M échantillons du symbole. Les préfix cycliques sont formatés avec une fenêtre de forme particulière. Le symbole ainsi constitué est noté US-OFDM, il apparaît à une cadence T0.

Tous les T0+T0/2, le procédé ajoute un préfix formaté selon un enchaînement différent à celui décrit précédemment. L'enchaînement est illustré par la figure 22. Le symbole de sortie de IFFT bénéficie d'un spectre bien localisé compte tenu du filtrage {1, -1) de la modulation OFDM/OQAM. Il n'y a donc pas de nécessité d'ajouter de préfix cyclique aux bords du symbole. Pour des raisons d'orthogonalité , le procédé insère deux préfix cycliques au milieu du symbole de longueur M. Ainsi, le procédé insère une copie des L derniers échantillons de la première partie de M/2 échantillons du symbole au début de la seconde partie de M/2 échantillons. Le procédé insère en outre une copie des L premiers échantillons de la seconde partie de M/2 échantillons du symbole à la fin de la première partie de M/2 échantillons. Le procédé formate ces copies de façon à ce que les échantillons du milieu égales zéro.

Le procédé procède ensuite à une sommation avec recouvrement entre symboles consécutifs comme illustré par la figure 23. Le recouvrement est de $\frac{M}{2} + L$ échantillons. Ainsi, un symbole à T0, c'est-à-dire qui combine les services MTC et MBB, est additionné avec le symbole suivant à T0+T0/2 c'est-à-dire qui est composé uniquement du service MTC. Cette addition intervient uniquement entre la dernière partie de longueur $\frac{M}{2} + L$ du symbole à T0 et la première partie du symbole à T0+T0/2 de longueur $\frac{M}{2} + L$. De même, un symbole à T0+T0/2 est additionné avec le symbole suivant à 2T0 sur une longueur de recouvrement de $\frac{M}{2} + L$ échantillons. Et ainsi de suite pour les différents symboles.

[3GPP] "Motivation for new WI on Low Complexity and Enhanced Coverage LTE UE for MTC", 3GPP TSG RAN Meeting #64 RP-140845, Sophia Antipolis, France, 10 - 13 June 2014 [Bellanger] FBMC physical layer : a primer », M. Bellanger, PHYDYAS, Juin 2010

## Revendications

1. Procédé (1) d'émission multi flux de symboles à transmettre cadencés à une fréquence F0 correspondant à des communications de types différents notamment de type sporadique (MTC) et de type cellulaire (MBB) mettant en œuvre une modulation multi porteuses à M sous-porteuses utilisant quel que soit le type de communication une même transformée (IFFT) fréquence temps de taille déterminée par le nombre *M* de sous-porteuses, tel qu'une communication de type cellulaire est mise en œuvre avec une modulation OFDM, **caractérisé en ce que** le procédé cadence la transformée (IFFT) fréquence temps à une fréquence 2 × *F*0, **en ce que** pour générer la modulation OFDM le procédé effectue un étirement temporel d'une séquence de symboles cadencés à la fréquence *F*0 pour fournir une séquence de symboles cadencés à la fréquence 2 × *F*0 et **en ce qu'**il filtre (FIL) une séquence de longueur *N* de symboles cadencés à la fréquence 2 × *F*0 avec un filtre linéaire fréquentiel à *L* = 2 coefficients égaux à {1, *w*} avec *w* ∈ [0,1] paramétrables en fonction du type de communication, *N* et *M* étant des naturels, *N < M*, pour générer *N* + *L* - 1 symboles, selon lequel le premier symbole filtré est le résultat du premier symbole de la séquence pondéré par le premier coefficient, selon lequel le *n^{e}* symbole filtré est le résultat de la différence entre le *n^{e}* symbole de la séquence pondéré par le premier coefficient et le (n - 1)*^{e}* symbole de la séquence pondéré avec le 2^{nd} coefficient, 1 < *n* ≤ *N,* et selon lequel le (*N* + 1)*^{e}* symbole filtré correspond au *n^{e}* symbole de la séquence affecté d'un signe négatif et pondéré avec le 2^{nd} coefficient, **en ce que** plusieurs séquences de symboles sont traitées en parallèle avec un nombre de symboles pouvant être différent entre les séquences et avec un paramétrage des coefficients du filtrage pour chaque type différent de communication associé aux séquences et **en ce que** les séquences filtrées sont mappées à l'entrée de la transformée fréquence temps chacune sur une sous bande pour générer par sous-bande une modulation OFDM de forme configurable via le paramétrage des coefficients du filtrage de la sous-bande.

2. Procédé (1) selon la revendication 1, dans lequel les symboles filtrés sont mappés à l'entrée de la transformée fréquence temps et dans lequel lors d'une mise en trame un premier préfix et un deuxième préfix cycliques formatés sont ajoutés à un symbole multi porteuse obtenu en sortie de la transformée.

3. Procédé (1) selon la revendication précédente dans lequel les *N* symboles d'une séquence sont pré codés avant d'être filtrés, le pré codage pré égalisant un effet de déphasage du filtrage.

4. Procédé (1) selon la revendication 1 dans lequel *w* = 0, dans lequel les symboles à transmettre sont complexes et dans lequel la séquence de longueur *N* est composée de *N* symboles complexes à transmettre.

5. Procédé (1) selon la revendication précédente dans lequel le procédé comprend en outre un mappage de pilotes à l'entrée de la transformée fréquence temps.

6. Procédé (1) selon la revendication 1 dans lequel w ≠ 0, dans lequel les symboles à transmettre sont complexes et la séquence de longueur N est composée de successions de la partie réelle et de la partie imaginaire des symboles à transmettre.

7. Procédé (1) selon la revendication précédente dans lequel le procédé comprend en outre une insertion de pilotes complexes dans la séquence de *N* symboles avant le filtrage telle que pour un même pilote de forme *Pᵣ* + *jPᵢ* sa partie réelle *Pᵣ* est insérée sous la forme *-Pᵣ*/*w* et sa partie imaginaire est insérée à la suite sous la forme *jPᵢ*.

8. Procédé (1) selon l'une des revendications précédentes comprenant l'émission d'un message de signalisation codant le paramétrage.

9. Dispositif (EM) de télécommunication multi flux de symboles à transmettre cadencés à une fréquence *F*0 correspondant à des communications de type différent notamment de type sporadique (MTC) ou de type cellulaire (MBB) mettant en œuvre une modulation multi porteuses à M sous-porteuses en utilisant un même transformateur (IFFT) fréquence temps (IFFT) de taille déterminée par le nombre M de sous-porteuses quel que soit le type de communication, tel qu'une communication de type cellulaire est mise en œuvre avec une modulation OFDM, **caractérisé en ce que** le transformateur (IFFT) fréquence temps est cadencé à une fréquence 2 × *F*0, **en ce que** plusieurs séquences de symboles sont traitées en parallèle avec un nombre de symboles pouvant être différent entre les séquences, **en ce que** pour générer la modulation OFDM le dispositif effectue un étirement temporel d'une séquence de symboles cadencés à la fréquence *F*0 pour fournir une séquence de symboles cadencés à la fréquence 2 × *F*0 et **en ce qu'**il comprend autant de filtres (FIL) linéaires fréquentiels à *L* = 2 coefficients égaux à {1, *w*} avec *w* ∈ [0,1] paramétrables en fonction du type de communication que de séquences en parallèle pour générer *N* + *L* - 1 symboles à partir d'une séquence de longueur *N* de symboles cadencés à la fréquence 2 × *F*0, N et M étant des naturels, *N* < *M*, selon lequel le premier symbole filtré est le résultat du premier symbole de la séquence pondéré par le premier coefficient, selon lequel le *n^{e}* symbole filtré est le résultat de la différence entre le *n^{e}* symbole de la séquence pondéré par le premier coefficient et le (n - 1)*^{e}* symbole de la séquence pondéré avec le 2^{nd} coefficient, 1 < *n* ≤ *N,* et selon lequel le (*N* + 1)*^{e}* symbole filtré correspond au *n^{e}* symbole de la séquence affecté d'un signe négatif et pondéré avec le 2^{nd} coefficient et **en ce qu'**il comprend un mappeur (MAP) pour mapper les séquences filtrées à l'entrée du transformateur chacune sur une sous bande pour générer par sous-bande une modulation OFDM de forme configurable via le paramétrage des coefficients du filtre de la sous-bande.

## Patentansprüche

1. Mehrstrom-Sendeverfahren (1) von zu übertragenden Symbolen, die mit einer Frequenz F0 entsprechend Kommunikationen unterschiedlicher Arten, insbesondere sporadischer (MTC) und zellularer Art (MBB), getaktet sind, das eine Mehrträgermodulation mit M Subträgern durchführt, die unabhängig von der Art der Kommunikation eine gleiche Frequenz-Zeit-Transformation (IFFT) einer durch die Anzahl M von Subträgern bestimmten Größe verwendet, derart, dass eine Kommunikation der zellularen Art mit einer OFDM-Modulation durchgeführt wird, **dadurch gekennzeichnet, dass** das Verfahren die Frequenz-Zeit-Transformation (IFFT) mit einer Frequenz 2 × F0 taktet, dass das Verfahren zur Erzeugung der OFDM-Modulation eine zeitliche Dehnung einer Folge von mit der Frequenz F0 getakteten Symbolen ausführt, um eine Folge von mit der Frequenz 2 × F0 getakteten Symbolen zu liefern, und dass es eine Folge einer Länge N von mit der Frequenz 2 × F0 getakteten Symbolen mit einem linearen Frequenzfilter mit L = 2 Koeffizienten gleich [1,w] filtert (FIL), mit w e [0,1], die abhängig von der Art der Kommunikation parametrierbar sind, wobei N und M natürliche Zahlen sind, N < M, um N + L - 1 Symbole zu erzeugen, wobei das erste gefilterte Symbol das Ergebnis des ersten Symbols der Folge gewichtet durch den ersten Koeffizienten ist, wobei das n-te gefilterte Symbol das Ergebnis der Differenz zwischen dem n-ten Symbol der Folge gewichtet durch den ersten Koeffizienten und dem (n - 1)-ten Symbol der Folge gewichtet mit dem 2-ten Koeffizienten ist, 1 < n ≤ N, und wobei das (N + 1)-te gefilterte Symbol dem n-ten Symbol der Folge entspricht, das mit einem negativen Vorzeichen versehen und mit dem 2-ten Koeffizienten gewichtet ist, dass mehrere Folgen von Symbolen parallel mit einer Anzahl von Symbolen, die zwischen den Folgen unterschiedlich sein kann, und mit einer Parametrierung der Koeffizienten der Filterung für jede unterschiedliche Art von Kommunikation verarbeitet werden, die den Folgen zugeordnet ist, und dass die gefilterten Folgen am Eingang der Frequenz-Zeit-Transformation jede in einem Subband gemappt werden, um pro Subband eine OFDM-Modulation einer Form zu erzeugen, die mittels der Parametrierung der Koeffizienten der Filterung des Subbands konfigurierbar ist.

2. Verfahren (1) nach Anspruch 1, wobei die gefilterten Symbole am Eingang der Frequenz-Zeit-Transformation gemappt werden, und wobei bei einer Rahmenbildung ein erstes und ein zweites zyklisch formatiertes Präfix zu einem Mehrträger-Symbol hinzugefügt werden, das am Ausgang der Transformation erhalten wird.

3. Verfahren (1) nach dem vorhergehenden Anspruch, wobei die N Symbole vorcodiert werden, ehe sie gefiltert werden, wobei die Vorcodierung eine Phasenverschiebungswirkung der Filterung ausgleicht.

4. Verfahren (1) nach Anspruch 1, wobei w = 0, wobei die zu übertragenden Symbole komplex sind und wobei die Folge der Länge N aus N zu übertragenden komplexen Symbolen besteht.

5. Verfahren (1) nach dem vorhergehenden Anspruch, wobei das Verfahren außerdem ein Mapping von Piloten am Eingang der Frequenz-Zeit-Transformation enthält.

6. Verfahren (1) nach Anspruch 1, wobei w ≠ 0, wobei die zu übertragenden Symbole komplex sind und die Folge der Länge N aus Aufeinanderfolgen des realen Teils und des imaginären Teils der zu übertragenden Symbole besteht.

7. Verfahren (1) nach dem vorhergehenden Anspruch, wobei das Verfahren außerdem ein Einfügen von komplexen Piloten in die Folge von N Symbolen vor dem Filtern enthält, derart, dass für einen gleichen Piloten der Form Pᵣ + jPᵢ sein realer Teil Pᵣ in der Form -Pᵣ/w eingefügt und sein imaginärer Teil im Anschluss in der Form jPᵢ eingefügt wird.

8. Verfahren (1) nach einem der vorhergehenden Ansprüche, das das Senden einer die Parametrierung codierenden Signalisierungsnachricht enthält.

9. Mehrstrom-Telekommunikationsvorrichtung (EM) von zu übertragenden Symbolen, die mit einer Frequenz F0 entsprechend Kommunikationen unterschiedlicher Art, insbesondere sporadischer (MTC) oder zellularer Art (MBB), getaktet sind, die eine Mehrträgermodulation mit M Subträgern durchführt, unter Verwendung eines gleichen Frequenz-Zeit-Transformators (IFFT) einer durch die Anzahl M von Subträgern bestimmten Größe unabhängig von der Art der Kommunikation, derart, dass eine Kommunikation der zellularen Art mit einer OFDM-Modulation durchgeführt wird, **dadurch gekennzeichnet, dass** der Frequenz-Zeit-Transformator (IFFT) mit einer Frequenz 2 × F0 getaktet wird, dass mehrere Folgen von Symbolen mit einer Anzahl von Symbolen parallel verarbeitet werden, die zwischen den Folgen unterschiedlich sein kann, dass die Vorrichtung zur Erzeugung der OFDM-Modulation eine zeitliche Dehnung einer Folge von mit der Frequenz F0 getakteten Symbolen ausführt, um eine Folge von mit der Frequenz 2 × F0 getakteten Symbolen zu liefern, und dass sie so viele lineare Frequenzfilter (FIL) mit L = 2 Koeffizienten gleich [1,w], mit w ∈ [0,1], die abhängig von der Art der Kommunikation parametrierbar sind, wie parallele Folgen enthält, um N + L - 1 Symbole ausgehend von einer Folge der Länge N von mit der Frequenz 2 × F0 getakteten Symbolen zu erzeugen, wobei N und M natürliche Zahlen sind, N < M, wobei das erste gefilterte Symbol das Ergebnis des ersten Symbols der Folge gewichtet durch den ersten Koeffizienten ist, wobei das n-te gefilterte Symbol das Ergebnis der Differenz zwischen dem n-ten Symbol der Folge gewichtet durch den ersten Koeffizienten und dem (n - 1)-ten Symbol der Folge gewichtet mit dem 2-ten Koeffizienten ist, 1 < n ≤ N, und wobei das (N + 1)-te gefilterte Symbol dem n-ten Symbol der Folge entspricht, das mit einem negativen Vorzeichen versehen und mit dem 2-ten Koeffizienten gewichtet ist, und dass sie einen Mappierer (MAP) enthält, um die gefilterten Folgen am Eingang des Transformators jede in einem Subband zu mappieren, um pro Subband eine OFDM-Modulation einer Form zu erzeugen, die mittels der Parametrierung der Koeffizienten des Filters des Subbands konfigurierbar ist.

## Claims

1. Method (1) for multi-stream transmission of symbols to be transmitted sampled at a frequency F0 corresponding to communications of different types, in particular of sporadic type (MTC) and of cellular type (MBB), implementing multi-carrier modulation with M sub-carriers using, whatever the type of communication, the same frequency-time transform (IFFT) of a size determined by the number M of sub-carriers, such that communication of cellular type is implemented with OFDM modulation, **characterized in that** the method samples the frequency-time transform (IFFT) at a frequency 2 × F0, **in that**, in order to produce OFDM modulation, the method temporally stretches a sequence of symbols which are sampled at the frequency F0 in order to deliver a sequence of symbols which are sampled at the frequency 2 × F0 and **in that** it filters (FIL) a sequence, of length N, of symbols which are sampled at the frequency 2 × F0 using a linear frequency filter with L = 2 coefficients which are equal to {1,w}, with w ∈ [0,1], and can be parameterized in accordance with the type of communication, N and M being natural numbers, with N < M, in order to produce N + L - 1 symbols, according to which the first filtered symbol is the result of the first symbol of the sequence weighted by the first coefficient, according to which the n^{th} filtered symbol is the result of the difference between the n^{th} symbol of the sequence weighted by the first coefficient and the (n - 1)^{th} symbol of the sequence weighted with the 2^{nd} coefficient, with 1 < n ≤ N, and according to which the (N + 1)^{th} filtered symbol corresponds to the n^{th} symbol of the sequence affixed with a minus sign and weighted with the 2^{nd} coefficient, **in that** a plurality of sequences of symbols are processed in parallel with a number of symbols which may be different between the sequences and with a parameterization of the filtering coefficients, for each different type of communication, which is associated with the sequences and **in that** the filtered sequences are mapped to the input of the frequency-time transform, each on a sub-band in order to produce, per sub-band, OFDM modulation in a form which can be configured by parameterizing the filtering coefficients for the sub-band.

2. Method (1) according to Claim 1, wherein the filtered symbols are mapped to the input of the frequency-time transform and wherein, during framing, a first and a second formatted cyclic prefix are added to a multi-carrier symbol obtained at the output of the transform.

3. Method (1) according to the preceding claim, wherein the N symbols of a sequence are precoded before being filtered, with precoding pre-equalizing a phase-shift effect of filtering.

4. Method (1) according to Claim 1, wherein w = 0, wherein the symbols to be transmitted are complex and wherein the sequence of length N is composed of N complex symbols to be transmitted.

5. Method (1) according to the preceding claim, wherein the method further comprises mapping pilots to the input of the frequency-time transform.

6. Method (1) according to Claim 1, wherein w ≠ 0, wherein the symbols to be transmitted are complex and the sequence of length N is composed of series of the real part and the imaginary part of the symbols to be transmitted.

7. Method (1) according to the preceding claim, wherein the method further comprises inserting complex pilots into the sequence of N symbols before filtering so that, for the same pilot of form Pᵣ + jPᵢ, its real part Pᵣ is inserted in the form -Pᵣ/w and its imaginary part is subsequently inserted in the form jPᵢ.

8. Method (1) according to one of the preceding claims, comprising transmitting a signalling message coding the parameterization.

9. Device (EM) for multi-stream telecommunication of symbols to be transmitted sampled at a frequency F0 corresponding to communications of different types, in particular of sporadic type (MTC) or of cellular type (MBB), implementing multi-carrier modulation with M sub-carriers using the same frequency-time transformer (IFFT) of a size determined by the number M of sub-carriers whatever the type of communication, such that communication of cellular type is implemented with OFDM modulation, **characterized in that** the frequency-time transformer (IFFT) is sampled at a frequency 2 × F0, **in that** a plurality of sequences of symbols are processed in parallel with a number of symbols which may be different between the sequences, **in that**, in order to produce OFDM modulation, the device temporally stretches a sequence of symbols which are sampled at the frequency F0 in order to deliver a sequence of symbols which are sampled at the frequency 2 × F0 and **in that** it comprises as many linear frequency filters (FIL) with L = 2 coefficients which are equal to {1,w}, with w ∈ [0,1], and can be parameterized in accordance with the type of communication as sequences in parallel in order to produce N + L - 1 symbols on the basis of a sequence, of length N, of symbols which are sampled at the frequency 2 × F0, N and M being natural numbers, with N < M, according to which the first filtered symbol is the result of the first symbol of the sequence weighted by the first coefficient, according to which the n^{th} filtered symbol is the result of the difference between the n^{th} symbol of the sequence weighted by the first coefficient and the (n - 1)^{th} symbol of the sequence weighted with the 2^{nd} coefficient, with 1 < n ≤ N, and according to which the (N + 1)^{th} filtered symbol corresponds to the n^{th} symbol of the sequence assigned a minus sign and weighted with the 2^{nd} coefficient and **in that** it comprises a mapper (MAP) for mapping the filtered sequences to the input of the transformer, each on a sub-band in order to produce, per sub-band, OFDM modulation in a form which can be configured by parameterizing the coefficients of the filter for the sub-band.
